# EUROPEAN PATENT SPECIFICATION

(11) **EP 3 462 846 B1**
(45) Date of publication and mention of the grant of the patent: **30.12.2020**
(21) Application number: 16731518.3
(22) Date of filing: 26.05.2016
(51) Int. Cl.: A01K 1/01

(54) **A LIVESTOCK HOUSING INSTALLATION**
VIEHUNTERBRINGUNGSANLAGE
INSTALLATION D'ÉLEVAGE DE BÉTAIL

(43) Date of publication of application: 10.04.2019
(73) Proprietor: Costello, Lorraine, Ashbourne, County Meath (IE)
(72) Inventor: Costello, Lorraine, Ashbourne, County Meath (IE)
(74) Representative: Schütte, Gearoid
(86) International application number: PCT/EP2016/061949
(87) International publication number: WO 2017/202470

(56) References cited:
- EP-A2- 0 225 291
- CN-U- 201 541 552
- FR-A2- 2 505 603
- US-A- 5 817 241

## Description

### Introduction

The present invention relates to a livestock housing installation.

In particular, the invention relates to a livestock housing installation comprising a livestock area and a waste storage area located below the livestock area and divided therefrom by a floor having a plurality of spaced-apart through-holes therein such that livestock waste falls through the through-holes in the floor and into the waste storage area below. Such livestock housing installations are typically referred to as slatted units and are particularly common for use with cattle.

The waste storage area under the floor of slatted units forms a tank which must be emptied periodically. This can be a time-consuming process and naturally forming gases in the slurry that are released are lethal to humans and the animals that are housed within the unit. When the contents of the tank have been left without any agitation it can form a hard skin and so traps all gases within the tank. To empty the tank, the slurry must be mixed to enable it to be removed efficiently. This is typically achieved using an agitator connected to a tractor which is inserted into the tank at agitation points at each end of the tank. This then agitates and mixes up the slurry so it is easily removed. This process in turn releases any gases that are caught up in the slurry. When this process is done and the gas is being released, all animals and humans must be removed from the installation while the tanks are emptied. The slurry that is removed is in turn used by the farmer as a fertilizer and spread on their land to ensure grass growth. This raw slurry has a high odour content and a bad environmental impact where rivers and water sources can get polluted.

FR 2505603 discloses a livestock housing with a livestock area above a waste storage area such that waste falls into the waste storage area for subsequent anaerobic digestion.

A stand-alone anaerobic digester for handling animal waste is disclosed in US 4,274,838. In US 4,008,689, there is disclosed an animal waste collecting system in which the animal waste is partially decomposed in a collecting trough and is then gravity fed to a remote underground fermentation tank. Anaerobically treating pig waste in an anaerobic digester located remotely from a growing barn in which pigs are housed is disclosed in WO 02/17708. US 3,685,493 discloses an animal house with a slatted floor over a waste collecting pan which gravity feeds waste to a collecting trough within which is mounted an auger to discharge the waste to a sewage pond or lagoon. In CN 201541552, there is disclosed a pig house having a slatted floor with a plurality of screw conveyors in channels beneath the floor to feed and discharge collected waste to a remote manure storage pit.

It is an object therefore of the present invention to provide a livestock housing installation that overcomes at least some of the above-mentioned problems.

### Summary of the Invention

According to the invention there is provided a livestock housing installation comprising a livestock area and a waste storage area located below the livestock area and divided therefrom by a floor having a plurality of spaced-apart through-holes therein such that livestock waste falls through the through-holes and into the waste storage area below, the livestock housing installation further comprising an anaerobic digester, having an air-tight waste inlet and a gas outlet, located in the waste storage area; the anaerobic digester further having a waste receiving upper surface equipped with a waste manoeuvring system adapted to move waste falling thereon to the waste inlet, the waste receiving upper surface comprises a plurality of waste collection channels, a delivery channel is in fluid communication with the air-tight waste inlet, and the waste collection channels are in fluid communication with the delivery channel, characterised in that a plurality of substantially parallel waste collection channels are located side by side beneath the floor for reception of waste falling through the floor, each waste collection channel having an outlet end which discharges into the delivery channel which extends substantially perpendicularly to the waste collection channels, said delivery channel having an outlet communicating with the waste inlet of the anaerobic digester, a collection screw conveyor mounted in each waste collection channel for delivering waste material to the outlet end, and a delivery conveyor mounted in the delivery channel for delivering waste material to the waste inlet of the anaerobic digester.

In this way, the gases released by the waste are contained within the anaerobic digester and prevented from contaminating the livestock area. Furthermore, the biogas generated by the livestock waste may be efficiently captured by the farmer. The biogas may then be used by the farmer to generate usable energy, which may in turn be used to directly supply some of the farm's energy needs; or may be sold on to a third party.

The invention also prevents the release of methane gas into the environment. Methane is a 'greenhouse gas', its emission into the environment is undesirable. Finally, the installation of the invention will reduce unpleasant aromas in the vicinity as the gases will be enclosed within the anaerobic digester.

The invention also changes the raw slurry into digestate and so reduces the odour and environmental impact.

In one embodiment of the invention, the livestock area, the waste manoeuvring system and the waste storage area are vertically stacked, the waste manoeuvring system being mounted directly beneath the floor of the livestock area and directly above the waste storage area.

In a further embodiment of the invention there is provided a livestock housing installation in which the channels are arcuately shaped. This is a particularly efficient way of ensuring as much of the livestock waste as possible is gathered by the waste manoeuvring system.

In another embodiment, a pair of screw conveyors are mounted within the delivery channel to form the delivery conveyor, each of said screw conveyors being operable to direct waste material towards an outlet at a centre of the delivery channel at which the waste inlet of the anaerobic digester is located.

In another embodiment, the screw conveyors in the delivery channel are operable to feed waste material in opposite directions.

In another embodiment, the screw conveyors in the delivery channel have a common rotational axis.

In another embodiment, the screw conveyors in the delivery channel have a common drive motor.

In another embodiment, a feed screw conveyor is located within the anaerobic digester having an inlet communicating with the waste inlet of the anaerobic digester and an outlet located within the anaerobic digester.

In another embodiment, the feed screw conveyor is inclined downwardly between the waste inlet and a bottom of the anaerobic digester.

In another embodiment, the feed screw conveyor is mounted within an associated enclosed tube.

In another embodiment, at least one agitation propeller is mounted within the waste storage area.

In a further embodiment of the invention there is provided a number of services for the anaerobic digester, namely an agitation unit to mix the contents of the anaerobic digester, heating means to maintain the optimum heat in the anaerobic digester to ensure efficient anaerobic digestion can occur, an extract pipe to remove all gases generated by the anaerobic digester and also removal of digestate.

### Brief Description of the Drawings

The invention will be more clearly understood from the following description of some embodiments thereof, given by way of example only, with reference to the accompanying drawings in which:-
Fig. 1 is a schematic sectional elevational view of a livestock housing installation according to the invention;
Fig. 2 is a plan view below the floor of the livestock housing installation shown in Fig. 1;
Fig. 3 is an end sectional elevational view of the livestock housing installation shown in Figs. 1 and 2;

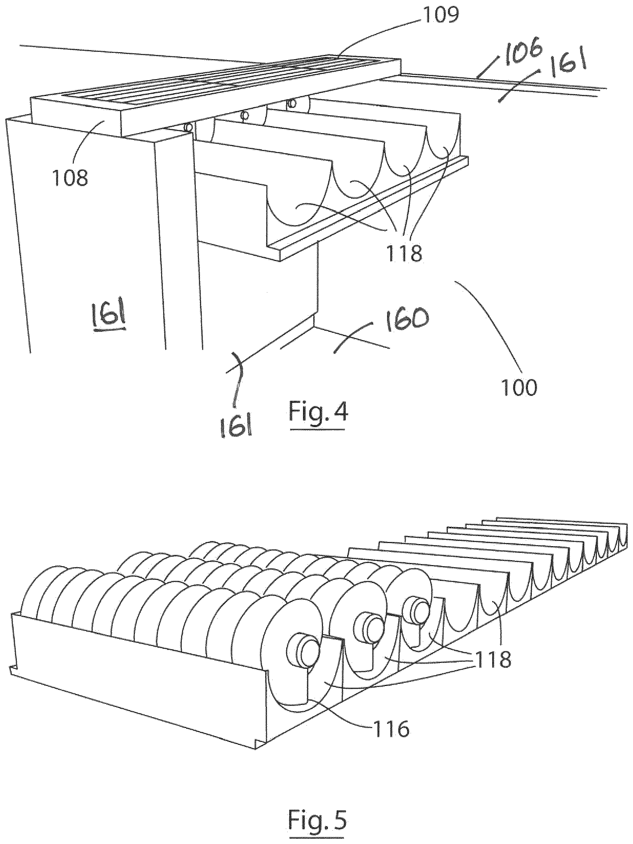

Fig. 4 is a detail partially cut-away perspective view of a portion of the livestock housing installation according to the invention;
Fig. 5 is a detail partially cut-away perspective view of a portion of the livestock housing installation, showing portion of a waste manoeuvring system;

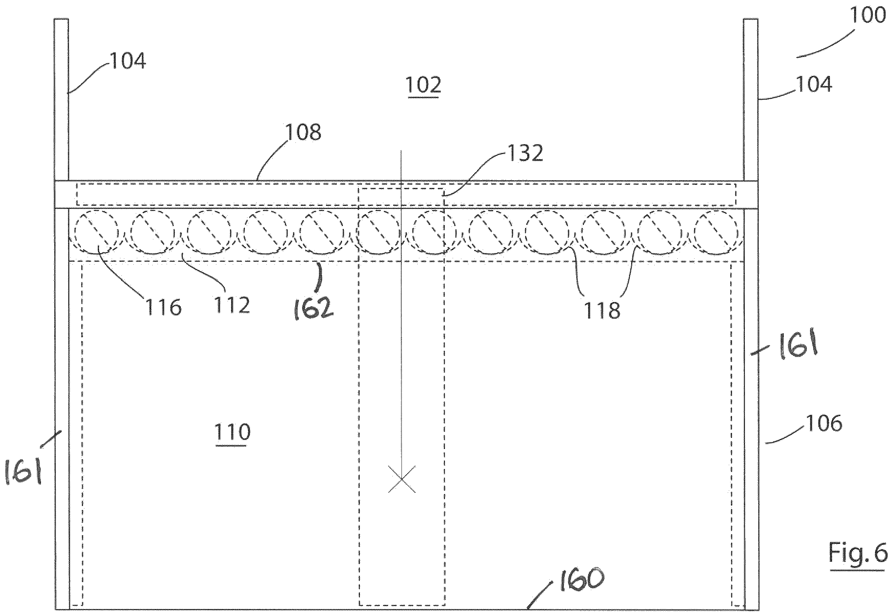

Fig. 6 is a sectional elevational view taken along the line VI-VI of Fig. 2;

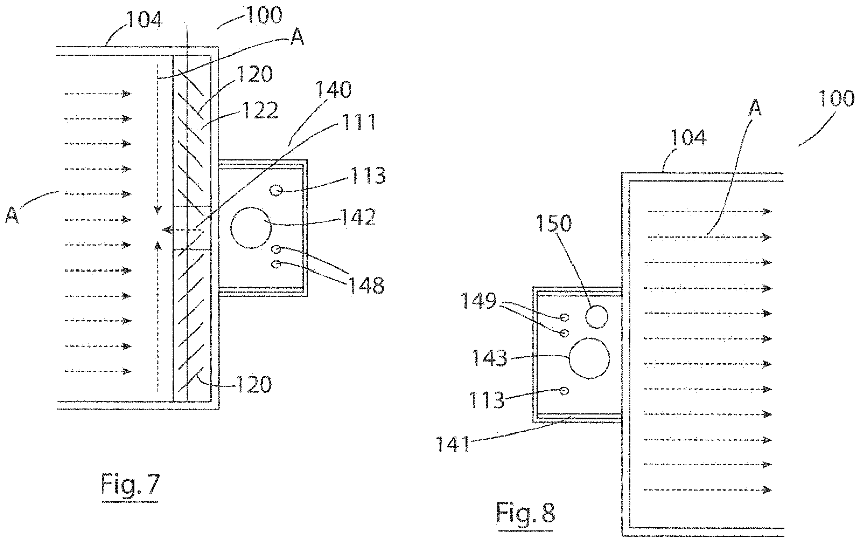

Fig. 7 is a detail plan view showing a first end of the livestock housing installation; and
Fig. 8 is a detail plan view showing a second end of the livestock housing installation.

### Detailed Description of the Preferred Embodiments

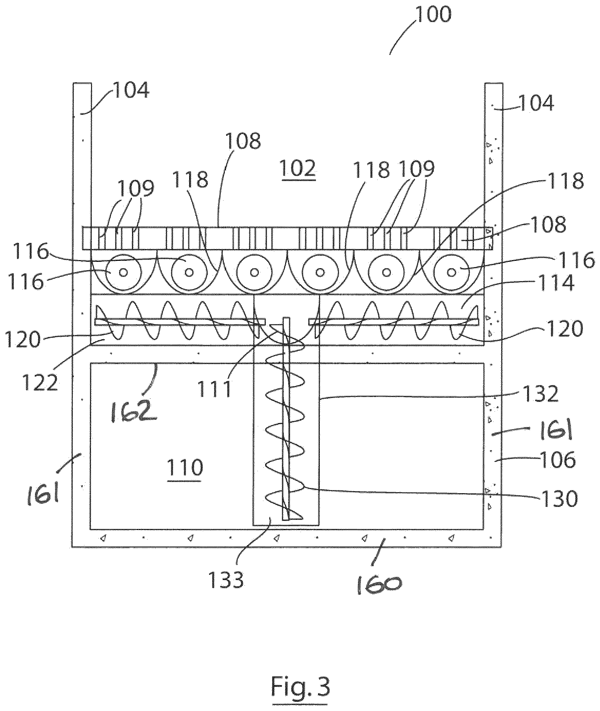

Referring to the drawings there is shown a livestock housing installation according to the invention indicated generally by the reference numeral 100. The livestock housing installation 100 comprises a livestock area 102, having upstanding livestock area side walls 104 and a waste storage area 106 located directly below the livestock area 102. The livestock area 102 is divided from the waste storage area 106 by a floor 108 having a plurality of spaced-apart through-holes 109 (Fig. 3) therein. The floor 108 allows livestock waste to fall through the through-holes 109 for delivery into the waste storage area 106 below.

The livestock housing installation 100 further comprises an anaerobic digester 110, having an air-tight waste inlet 111 and gas outlet pipes 113, located in the waste storage area 106.

The anaerobic digester 110 has a waste receiving upper surface 112 equipped with a waste manoeuvring system, indicated generally by the reference numeral 114 adapted to move waste falling thereon to the waste inlet 111 of the anaerobic digester 110.

The waste manoeuvring system 114 comprises a plurality of waste collection screw conveyors 116, arranged side by side, each in its own substantially semi-circufar waste collection channel 118 and drive motor 119. In this case, the upper surfaces of the waste collection channels 118 form the waste receiving upper surface 112. The waste collection channels 118 collectively form a waste collecting sump beneath the slatted floor 108.

At one end of the livestock housing installation 100, the waste manoeuvring system 114 further comprises a pair of delivery screw conveyors 120. The delivery screw conveyors 120 are located in a single delivery channel 122. The pair of delivery screw conveyors 120 are arranged collinearly in the delivery channel 122, with a gap therebetween. The delivery screw conveyors 120 are arranged orthogonally to the collection screw conveyors 116. Each delivery screw conveyor 120 directs waste inwardly towards a centrally located waste inlet 111 of the anaerobic digester 110.

The delivery screw conveyors 120 are located at a lower level than the collection screw conveyors 116, with the top of an inlet side of the delivery channel 122 connected to an outlet end of the waste collection channels 118 to receive waste from the waste collection channels 118.

An inclined anaerobic digester feed screw conveyor 130 is provided in an associated enclosed tube 132 at one end of the anaerobic digester 110. An upper inlet end of the enclosed tube 132 is located in the gap between the delivery screw conveyors 120 at the waste inlet 111 of the anaerobic digester 110, and the opposite outlet end 133 of the inclined feed screw conveyor 130 and associated housing tube 132 extends to a base of the anaerobic digester 110. The feed screw conveyor 130 is driven by a drive motor 134.

The livestock housing installation 100 further comprises plant areas 140, 141 at opposite ends of the livestock area 102 with motors 142, 143 that drive shafts 144, 145 of agitation propellers 146, 147 in the anaerobic digester 110.

Tank heating pipes 148, 149 extend into the anaerobic digester 110 at each end thereof through tank seal covers 152, 153. A slurry/digestate removal pipe 150 is provided in one of the plant areas 141 at one end of the anaerobic digester 110.

The livestock area 102 comprises the slatted floor 108 bounded by upstanding side walls 104, or alternatively rails or the like, with an access opening to allow animal movement onto and off the floor 108.

The waste storage area 106 is essentially an enclosed tank beneath the slatted floor 108 which receives and stores animal waste directed thereto by means of the waste manoeuvring system 114 mounted on top of the waste storage area 106 and formed integrally with a roof or ceiling of the waste storage area 106. The waste storage area 106 is adapted to create an environment within which anaerobic digestion can take place. It can conveniently be constructed of reinforced concrete material and has a base 160 with an upstanding side wall 161 closed by a roof 162 at a top of the side wall which incorporates the waste manoeuvring system 114.

The delivery screw conveyor 120 in the delivery channel 122 comprises a pair of opposed screw conveyors 120 driven by a common drive motor 123. Both screw conveyors 120 direct waste inwardly towards the waste inlet 111 at a centre of the delivery channel 122.

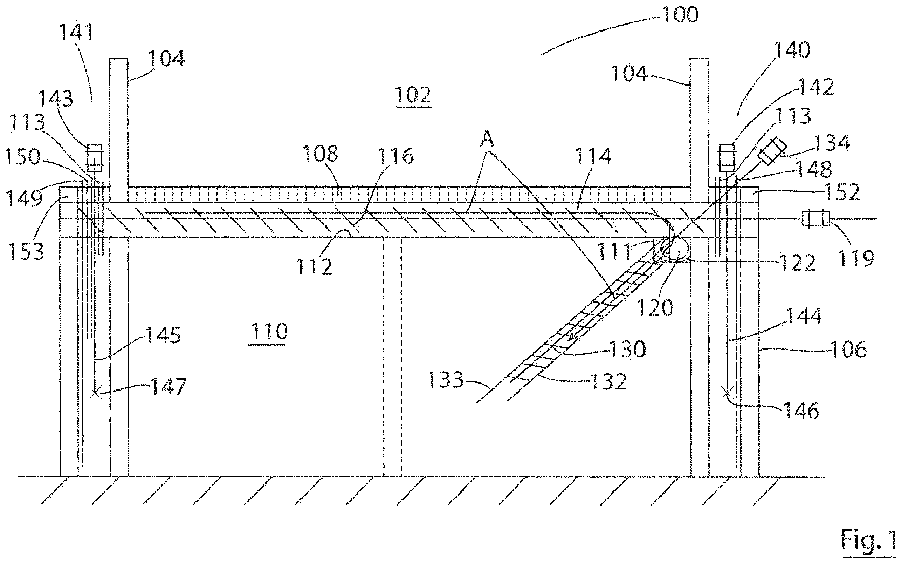

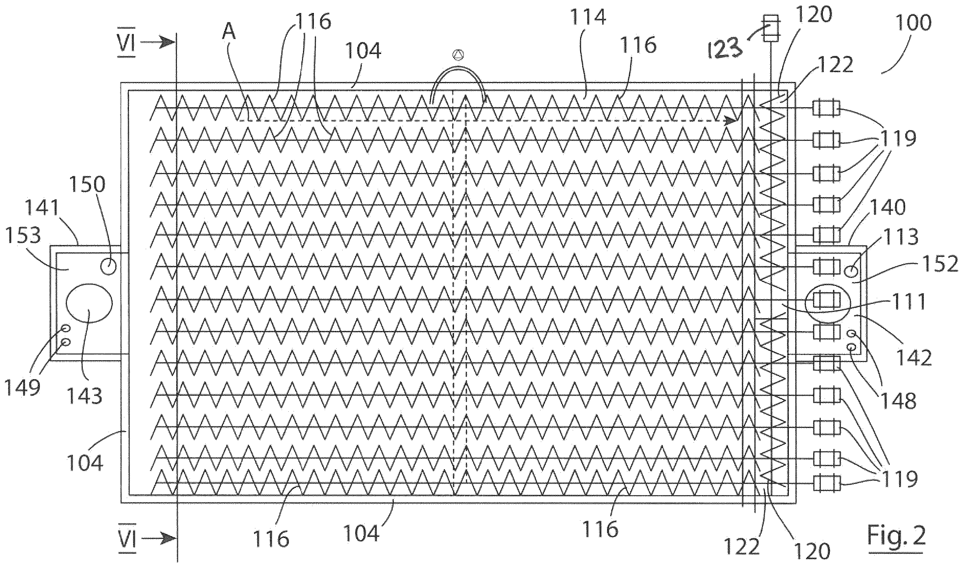

In use, livestock are housed within the livestock housing installation 100, wherein they stand on the slatted floor 108. Waste from the livestock will fall through the through-holes 109 in the slatted floor 108 onto the collection screw conveyors 116 and into the collection channels 118. The rotation of the collection screw conveyors 116 will cause the waste to be delivered in direction A (Fig. 1 and Fig. 2) towards, and eventually into, the delivery channel 122. The operation of the delivery screw conveyors 120 will cause the waste to move towards the centre of the delivery channel 122 to the waste inlet 111 of the anaerobic digester 110. From there, the inclined feed screw conveyor 130 will carry the waste down into the anaerobic digester 110.

It will be understood that the waste manoeuvring system is not limited to the screw conveyor arrangement described herein, and that other arrangements of screw conveyors, or for example, scraping systems or combinations thereof will be apparent to the person skilled in the art.

The anaerobic digester is shown formed from walls forming an enclosure defining the waste storage area 106, however it will be understood that the anaerobic digester unit itself may be formed within the enclosure. In such cases, the anaerobic digester will be formed snugly within the available space to utilise maximum storage capacity within the available area. The anaerobic digester may be formed from reinforced concrete or reinforced plastic, and may be formed modularly from a number of panels connected together to form an air-tight enclosure.

For the purposes of this description and in order not to unnecessarily obscure the present invention, specific details of the anaerobic digester have been omitted and are described only in functional terms, as many ways of achieving the required functionality will be readily apparent to the person skilled in the art.

Throughout the specification, the term slatted floor may be used to refer to a floor having a plurality of spaced apart through-holes therein such that livestock may stand on the floor, and their waste will fall through the through-holes. It will be understood that such floors are well known for use in livestock slatted units.

In the specification the terms 'comprise', 'comprises', 'comprised' and 'comprising' or any variation thereof and the terms 'include', 'includes', 'included' or 'including' or any variation thereof are considered to be totally interchangeable and they should all be afforded the widest possible interpretation.

The invention is not limited to the embodiments hereinbefore described, but may be varied in both construction and detail within the scope of the appended claims.

## Claims

1. A livestock housing installation (100) comprising a livestock area (102) and a waste storage area (106) located below the livestock area (102) and divided therefrom by a floor (108) having a plurality of spaced-apart through-holes (109) therein such that livestock waste falls through the through-holes (109) for delivery to the waste storage area (106) below, the livestock housing installation (100) further comprising an anaerobic digester (110), having an air-tight waste inlet (111) and a gas outlet (113), located in the waste storage area (106), the anaerobic digester (110) further having a waste receiving upper surface (112) located beneath the floor (108), the waste receiving upper surface (112) comprises a plurality of waste collection channels (118) and a delivery channel (122) is in fluid communication with the air-tight waste inlet (111), and the waste collection channels (118) are in fluid communication with the delivery channel (122), **characterised in that** the waste receiving upper surface (112) is equipped with a waste manoeuvring system (114) adapted to move waste falling thereon to the waste inlet (111), and **in that** a plurality of substantially parallel waste collection channels (118) are located side-by-side beneath the floor (108) for reception of waste falling through the floor (108), each waste collection channel (118) having an outlet end which discharges into the delivery channel (122) which extends substantially perpendicularly to the waste collection channels (118), said delivery channel (122) having an outlet communicating with the waste inlet (111) of the anaerobic digester (110), a collection screw conveyor (116) mounted in each waste collection (118) channel for delivering waste material to the outlet end, and a delivery conveyor (120) mounted in the delivery channel (122) for delivering waste material to the waste inlet (111) of the anaerobic digester (110).

2. A livestock housing installation (100) as claimed in claim 1, wherein the livestock area (102), the waste manoeuvring system (114) and the waste storage area (106) are vertically stacked, the waste manoeuvring system (114) being mounted directly beneath the floor (108) of the livestock area (102) and directly above the waste storage area (106).

3. A livestock housing installation (100) as claimed in claim 1 or 2, in which the channels (118, 122) are arcuately shaped.

4. A livestock housing installation (100) as claimed in any preceding claim, wherein a pair of screw conveyors (120) are mounted within the delivery channel (122) to form the delivery conveyor, each of said screw conveyors (120) being operable to direct waste material towards an outlet at a centre of the delivery channel (122) at which the waste inlet (111) of the anaerobic digester (110) is located.

5. A livestock housing installation (100) as claimed in claim 4, wherein the screw conveyors (120) mounted within the delivery channel (122) are operable to feed waste material in opposite directions.

6. A livestock housing installation (100) as claimed in claim 4 or claim 5 wherein the screw conveyors (120) mounted within the delivery channel (122) have a common rotational axis.

7. A livestock housing installation (100) as claimed in any one of claims 4 to 6, wherein the screw conveyors (120) mounted within the delivery channel (122) have a common drive motor (123).

8. A livestock housing installation (100) as claimed in any preceding claim, wherein a feed screw conveyor (130) is located within the anaerobic digester (110) having an inlet communicating with the waste inlet (111) of the anaerobic digester (110) and an outlet (133) located within the anaerobic digester (110).

9. A livestock housing installation (100) as claimed in claim 8, wherein the feed screw conveyor (130) is inclined downwardly between the waste inlet (111) and a bottom of the anaerobic digester (110).

10. A livestock housing installation (100) as claimed in claim 8 or claim 9, wherein the feed screw conveyor (130) is mounted within an associated enclosed tube (132).

11. A livestock housing installation (100) as claimed in any one of the preceding claims, wherein at least one agitation propeller (146, 147) is mounted within the waste storage area (106).

## Patentansprüche

1. Viehstallanlage (100), die Folgendes umfasst: einen Viehbereich (102) und einen Mistlagerbereich (106), der sich unter dem Viehbereich (102) befindet und durch einen Boden (108) mit einer Vielzahl von voneinander beabstandeten Durchgangslöchern (109) darin davon getrennt ist, sodass Viehmist durch die Durchgangslöcher (109) fällt, um dem Mistlagerbereich (106) darunter zugeführt zu werden, wobei die Viehstallanlage (100) ferner einen in dem Mistlagerbereich (106) befindlichen anaeroben Gärraum (110) umfasst, der einen luftdichten Misteinlass (111) und einen Gasauslass (113) aufweist, wobei der anaerobe Gärraum (110) ferner eine unter dem Boden (108) befindliche obere Mistaufnahmefläche (112) aufweist, wobei die obere Mistaufnahmefläche (112) eine Vielzahl von Mistsammelkanälen (118) umfasst und ein Zuführkanal (122) mit dem luftdichten Misteinlass (111) in Fluidverbindung steht und die Mistsammeikanäle (118) mit dem Zuführkanal (122) in Fluidverbindung stehen, **dadurch gekennzeichnet, dass** die obere Mistaufnahmefläche (112) mit einem Mistmanövriersystem (114) ausgestattet ist, das dazu angepasst ist, darauf fallenden Mist zu dem Misteinlass (111) zu bewegen, und dadurch, dass sich eine Vielzahl von im Wesentlichen parallelen Mistsammelkanälen (118) zur Aufnahme von durch den Boden (108) fallendem Mist nebeneinander unter dem Boden (108) befinden, wobei die Mistsammeikanäle (118) jeweils ein Auslassende aufweisen, das in den Zuführkanal (122) mündet, der sich im Wesentlichen senkrecht zu den Mistsammelkanälen (118) erstreckt, wobei der Zuführkanal (122) Folgendes aufweist: einen Auslass, der mit dem Misteinlass (111) des anaeroben Gärraums (110) in Verbindung steht, einen in jedem Mistsammelkanal (118) installierten Sammelschneckenförderer (116), zum Zuführen von Mistmaterial zu dem Auslassende und einen Zuführförderer (120), der in dem Zuführkanal (122) installiert ist, um Mistmaterial zu dem Misteinlass (111) des anaeroben Gärraums (110) zuzuführen.

2. Viehstallanlage (100) nach Anspruch 1, wobei der Viehbereich (102), das Mistmanövriersystem (114) und der Mistlagerbereich (106) vertikal gestapelt sind, wobei das Mistmanövriersystem (114) direkt unter dem Boden (108) des Viehbereichs (102) und direkt über dem Mistlagerbereich (106) installiert ist.

3. Viehstallanlage (100) nach Anspruch 1 oder 2, wobei die Kanäle (118, 122) bogenförmig sind.

4. Viehstallanlage (100) nach einem der vorangehenden Ansprüche, wobei ein Paar Schneckenförderer (120) in dem Zuführkanal (122) installiert ist, um den Zuführförderer zu bilden, wobei die Schneckenförderer (120) jeweils betätigbar sind, um Mistmaterial in Richtung eines Auslasses an einer Mitte des Zuführkanals (122) zu leiten, an der sich der Misteinlass (111) des anaeroben Gärraums (110) befindet.

5. Viehstallanlage (100) nach Anspruch 4, wobei die in dem Zuführkanal (122) installierten Schneckenförderer (120) betätigbar sind, um Mistmaterial in entgegengesetzten Richtungen aufzugeben.

6. Viehstallanlage (100) nach Anspruch 4 oder Anspruch 5, wobei die in dem Zuführkanal (122) installierten Schneckenförderer (120) eine gemeinsame Drehachse aufweisen.

7. Viehstallanlage (100) nach einem der Ansprüche 4 bis 6, wobei die in dem Zuführkanal (122) installierten Schneckenförderer (120) einen gemeinsamen Antriebsmotor (123) aufweisen.

8. Viehstallanlage (100) nach einem der vorangehenden Ansprüche, wobei sich ein Aufgabeschneckenförderer (130) in dem anaeroben Gärraum (110) befindet, der einen mit dem Misteinlass (111) des anaeroben Gärraums (110) in Verbindung stehenden Einlass und einen in dem anaeroben Gärraum (110) befindlichen Auslass (133) aufweist.

9. Viehstallanlage (100) nach Anspruch 8, wobei der Aufgabeschneckenförderer (130) zwischen dem Misteinlass (111) und einem Boden des anaeroben Gärraums (110) nach unten geneigt ist.

10. Viehstallanlage (100) nach Anspruch 8 oder Anspruch 9, wobei der Aufgabeschneckenförderer (130) in einem zugehörigen geschlossenen Rohr (132) installiert ist.

11. Viehstallanlage (100) nach einem der vorangehenden Ansprüche, wobei mindestens ein Rührpropeller (146, 147) in dem Mistlagerbereich (106) installiert ist.

## Revendications

1. Installation formant bâtiment pour bétail (100) comportant une zone pour bétail (102) et une zone de stockage de déchets (106) se trouvant sous la zone pour bétail (102) et séparée de celle-ci par un plancher (108) ayant une pluralité de trous traversants espacés les uns des autres (109) dans celui-ci de telle sorte que les déchets du bétail tombent au travers des trous traversants (109) à des fins d'acheminement jusqu'à la zone de stockage de déchets (106) se trouvant dessous, l'installation formant bâtiment pour bétail (100) comportant par ailleurs un digesteur anaérobie (110), ayant une entrée pour déchets étanche à l'air (111) et une sortie d'échappement de gaz (113), se trouvant dans la zone de stockage de déchets (106), le digesteur anaérobie (110) ayant par ailleurs une surface supérieure de réception de déchets (112) se trouvant sous le plancher (108), la surface supérieure de réception de déchets (112) comporte une pluralité de canaux de collecte de déchets (118) et un canal d'acheminement (122) est en communication fluidique avec l'entrée pour déchets étanche à l'air (111), et les canaux de collecte de déchets (118) sont en communication fluidique avec le canal d'acheminement (122), **caractérisée en ce que** la surface supérieure de réception de déchets (112) est équipée d'un système de manœuvre de déchets (114) adapté pour déplacer les déchets qui tombent sur celui-ci jusqu'à l'entrée pour déchets (111), et **en ce qu'**une pluralité de canaux de collecte de déchets sensiblement parallèles (118) se trouvent côte à côte sous le plancher (108) à des fins de réception des déchets qui tombent au travers du plancher (108), chaque canal de collecte de déchets (118) ayant une extrémité de sortie qui décharge dans le canal d'acheminement (122) qui s'étend de manière sensiblement perpendiculaire jusqu'aux canaux de collecte de déchets (118), ledit canal d'acheminement (122) ayant une sortie en communication avec l'entrée pour déchets (111) du digesteur anaérobie (110), un transporteur à vis de collecte (116) monté dans chaque canal de collecte de déchets (118) à des fins d'acheminement des matériaux de déchets jusqu'à l'extrémité de sortie, et un transporteur d'acheminement (120) monté dans le canal d'acheminement (122) à des fins d'acheminement des matériaux de déchets jusqu'à l'entrée pour déchets (111) du digesteur anaérobie (110).

2. Installation formant bâtiment pour bétail (100) selon la revendication 1, dans laquelle la zone pour bétail (102), le système de manœuvre de déchets (114) et la zone de stockage de déchets (106) sont empilés à la verticale, le système de manœuvre de déchets (114) étant monté directement sous le plancher (108) de la zone pour bétail (102) et directement au-dessus de la zone de stockage de déchets (106).

3. Installation formant bâtiment pour bétail (100) selon la revendication 1 ou la revendication 2, dans laquelle les canaux (118, 122) sont réalisés en forme d'arc.

4. Installation formant bâtiment pour bétail (100) selon l'une quelconque des revendications précédentes, dans laquelle une paire de transporteurs à vis (120) sont montés à l'intérieur du canal d'acheminement (122) pour former le transporteur d'acheminement, chacun desdits transporteurs à vis (120) servant à diriger les matériaux de déchets vers une sortie au niveau d'un centre du canal d'acheminement (122) au niveau duquel se trouve l'entrée pour déchets (111) du digesteur anaérobie (110).

5. Installation formant bâtiment pour bétail (100) selon la revendication 4, dans laquelle les transporteurs à vis (120) montés à l'intérieur du canal d'acheminement (122) servent à alimenter les matériaux de déchets dans des directions opposées.

6. Installation formant bâtiment pour bétail (100) selon la revendication 4 ou la revendication 5, dans laquelle les transporteurs à vis (120) montés à l'intérieur du canal d'acheminement (122) ont un axe de rotation commun.

7. Installation formant bâtiment pour bétail (100) selon l'une quelconque des revendications 4 à 6, dans laquelle les transporteurs à vis (120) montés à l'intérieur du canal d'acheminement (122) ont un moteur d'entraînement commun (123).

8. Installation formant bâtiment pour bétail (100) selon l'une quelconque des revendications précédentes, dans laquelle un transporteur à vis d'avance (130) se trouve à l'intérieur du digesteur anaérobie (110) ayant une entrée en communication avec l'entrée pour déchets (111) du digesteur anaérobie (110) et une sortie (133) se trouvant à l'intérieur du digesteur anaérobie (110).

9. Installation formant bâtiment pour bétail (100) selon la revendication 8, dans laquelle le transporteur à vis d'avance (130) est incliné vers le bas entre l'entrée pour déchets (111) et une partie inférieure du digesteur anaérobie (110).

10. Installation formant bâtiment pour bétail (100) selon la revendication 8 ou la revendication 9, dans laquelle le transporteur à vis d'avance (130) est monté à l'intérieur d'un tube fermé associé (132).

11. Installation formant bâtiment pour bétail (100) selon l'une quelconque des revendications précédentes, dans laquelle au moins une hélice agitatrice (146, 147) est montée à l'intérieur de la zone de stockage de déchets (106).
